# EUROPÄISCHE PATENTSCHRIFT

(11) **EP 2 016 313 B1**
(45) Veröffentlichungstag und Bekanntmachung des Hinweises auf die Patenterteilung: **28.03.2012**
(21) Anmeldenummer: 07722406.1
(22) Anmeldetag: 09.05.2007
(51) Int. Cl.: F16J 9/14

(54) **KOLBENRING FÜR DEN KOLBEN EINES VERBRENNUNGSMOTORS**
PISTON RING FOR THE PISTON OF AN INTERNAL COMBUSTION ENGINE
SEGMENT DE PISTON POUR PISTON DE MOTEUR À COMBUSTION INTERNE

(30) Priorität: 10.05.2006 DE 102006022027
(43) Veröffentlichungstag der Anmeldung: 21.01.2009
(73) Patentinhaber: MAHLE International GmbH, 70376 Stuttgart (DE)
(72) Erfinder: MARIANO, Joao, Roberto, 73650 Winterbach (DE)
(74) Vertreter: Pohle, Reinhard
(86) Internationale Anmeldenummer: PCT/DE2007/000857
(87) Internationale Veröffentlichungsnummer: WO 2007/128302

(56) Entgegenhaltungen:
- DE-C- 852 321
- FR-A- 1 118 722

## Beschreibung

Die Erfindung betrifft einen Kolbenring für den Kolben eines Verbrennungsmotors nach dem Oberbegriff des Patentanspruches.

Aus der Deutschen Patentschrift Nr. 852 321 ist es bekannt, den Ringstoß eines Kolbenringes so auszubilden, dass im Bereich der brennraumzugewandten Oberflanke des Kolbenringes und im Bereich der brennraumabgewandten Unterflanke des Kolbenringes jeweils ein senkrecht zu diesen Flanken liegender, äußerer Ringstoßbereich angeordnet ist, wobei diese Ringstoßbereiche über einen parallel zu den Flanken liegenden, mittleren Ringstoßbereich miteinander verbunden sind. Dies hat den Nachteil, dass in dem mittleren Ringstoßbereich sich ansammelnder Kohlenstoff bewirkt, dass der axiale Durchmesser des Kolbenringes im diesem Bereich insoweit zunimmt, dass dieser Bereich des Kolbenrings in der Ringnut festklemmt. Das Fehlen der freien Beweglichkeit dieses Kolbenringbereiches aber führt zu Beschädigungen der Innenfläche des Zylinders.

Zudem ist aus der oben genannten Patentschrift ein von der brennraumzugewandten Oberflanke bis zur brennraumabgewandten Unterflanke reichender und zu den Flanken schräg angeordnete Ringstoß bekannt. Nachteilig ist hierbei, dass sich zwischen den Stoßenden des Ringstoßes und jeweils einer Flanke des Kolbenringes spitzwinklige Kanten ergeben, die sowohl bei der Ringherstellung und als auch im Motorbetrieb abbrechen und einen Motorschaden verursachen können.

Diese Nachteile des Standes der Technik zu vermeiden, ist Aufgabe der Erfindung. Gelöst wird diese Ausgabe mit den im Kennzeichen des Patentanspruches stehenden Merkmalen.

Ein Ausführungsbeispiel der Erfindung wird im Folgenden anhand der Zeichnungen beschrieben. Es zeigen
- Fig. 1: einen Kolbenring für den Kolben eines Verbrennungsmotors in Draufsicht,
- Fig. 2: einen Schnitt durch den Kolbenring entlang der Linie II-II in Fig. 1 und
- Fig. 3: eine Seitenansicht des Kolbenringes zur Darstellung des erfindungsgemäß ausgebildeten Ringstoßes.

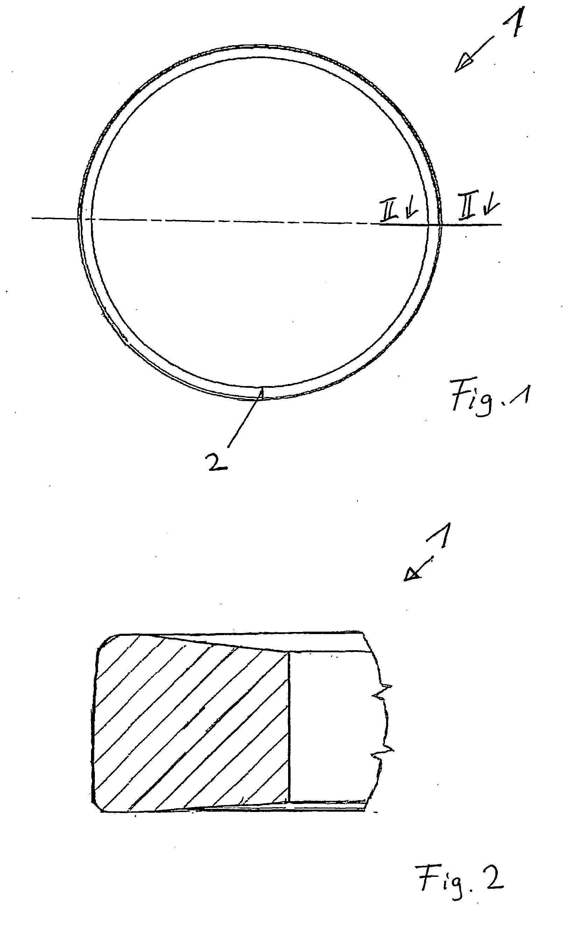

Fig. 1 zeigt einen Kolbenring 1 gemäß der Erfindung für den Kolben eines Verbrennungsmotors in Draufsicht, wobei den Ringstoß 2 des Kolbenrings 1 erkennbar ist. Herstellbar ist der Kolbenring aus Grauguss, aus Stahl oder aus Gusseisen mit Kugelgraphit.

In Fig. 2 ist ein Schnitt durch den Kolbenring 1 entlang der Linie II-II in Fig. 1 dargestellt, der verdeutlicht, dass der Kolbenring 1 als doppelseitiger Trapezring ausgebildet ist.

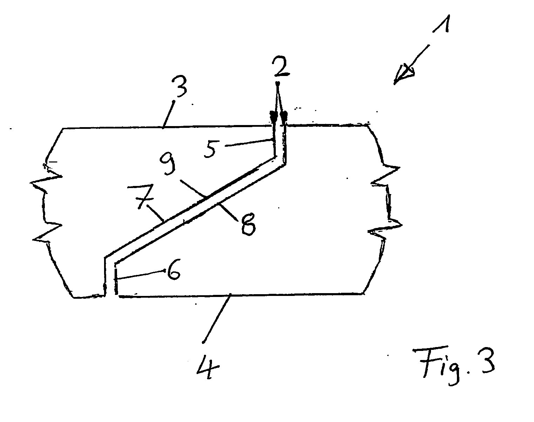

Die Seitenansicht des Kolbenrings 1 gemäß Fig. 3 zeigt die erfindungsgemäße Ausgestaltung des Ringstoßes 2, die im Bereich der brennraumzugewandten Oberflanke 3 und im Bereich der brennraumabgewandten Unterflanke 4 des Kolbenrings 1 je einen senkrecht zu diesen Flanken 3, 4 liegenden Stoßbereich 5 und 6 aufweist. Die Länge der beiden äußeren Stoßbereiche 5 und 6 beträgt näherungsweise 1/5 der gesamten Ringbreite und ist dergestalt zu bemessen, dass der mittlere Bereich 7 des Ringsstoßes 2, der die beiden äußeren Stoßbereiche 5 und 6 miteinander verbindet, in Bezug zu den Flanken 3 und 4 des Kolbenrings 1 schräg angeordnet ist.

Der erfindungsgemäß ausgestaltete Ringstoß 2 hat zum einen der Vorteil, dass die beiden äußeren Stoßbereiche 5 und 6 sowohl bei der Herstellung des Kolbenringes 1 als auch im Motorbetrieb mechanisch belastbar sind. Zum anderen lagert sich im Motorbetrieb sowohl in den äußeren Stoßbereichen 5 und 6 als auch im mittleren Bereich 7 des Ringstoßes 2 Kohlenstoff ab, der durch die im Motorbetrieb stattfindenden Relativbewegungen der beiden Enden 8 und 9 des Kolbenringes 1 im mittleren Stoßbereich 7 zerkleinert und über die äußeren Stoßbereiche 5 und 6 aus dem Ringstoß 2 ausgeschieden wird.

### Bezugszeichenliste

- 1: Kolbenring
- 2: Ringstoß
- 3: brennraumzugewandte Oberflanke des Kolbenringes 1
- 4: brennraumabgewandte Unterflanke des Kolbenrings 1
- 5, 6: äußerer Stoßbereich
- 7: mittlerer Bereich des Ringstoßes 2
- 8, 9: Enden des Kolbenrings 1

## Patentansprüche

1. Kolbenring (1) für den Kolben eines Verbrennungsmotors mit einem Ringstoß (2),
**dadurch gekennzeichnet, dass** der Ringstoß (2) im Bereich der brennraumzugewandten Oberflanke (3) und im Bereich der brennraumabgewandten Unterflanke (4) des Kolbenrings (1) je einen zumindest näherungsweise senkrecht zu den beiden Flanken (3, 4) angeordneten, äußeren Stoßbereich (5, 6) aufweist, und dass der Ringstoß (2) einen mittleren Bereich (7) aufweist, der die beiden äußere Stoßbereiche (5, 6) miteinander verbindet, und der in Bezug auf die Flanken (3, 4) des Kolbenrings (1) schräg angeordnet ist.

## Claims

1. Piston ring (1) for the piston of an internal combustion engine with a ring joint (2),
**characterized in that** the ring joint (2) of the piston ring (1) has in the area of its upper flank (3) facing the combustion chamber and in the area of its lower flank (4) facing away from the combustion chamber an outer joint area (5, 6) respectively arranged at least approximately perpendicular to the two flanks (3, 4), and **in that** the ring joint (2) has a central area (7) connecting the two outer joint areas (5, 6) and arranged at an angle relative to the flanks (3, 4) of the piston ring (1).

## Revendications

1. Segment de piston (1) pour le piston d'un moteur à combustion avec une coupe (2),
**caractérisé en ce que** la coupe (2) présente, dans la région du flanc supérieur (3) faisant face à la chambre de combustion et dans la région du flanc inférieur (4) du segment de piston (1), opposé à la chambre de combustion, respectivement une région de coupe externe (5, 6) disposée au moins approximativement perpendiculairement aux deux flancs (3, 4), et que la coupe (2) présente une région centrale (7) qui relie les deux régions de coupe externes (5, 6) et qui est inclinée par rapport aux flancs (3, 4) du segment de piston (1).
